# EUROPÄISCHE PATENTSCHRIFT

(11) **EP 1 470 472 B1**
(45) Veröffentlichungstag und Bekanntmachung des Hinweises auf die Patenterteilung: **14.03.2007**
(21) Anmeldenummer: 03702428.8
(22) Anmeldetag: 13.01.2003
(51) Int. Cl.: G06F 3/12

(54) **VERFAHREN ZUR AUTOMATISIERTEN ANNAHME UND WEITERLEITUNG VON DOKUMENTENBEARBEITUNGSAUFTRÄGEN**
METHOD FOR THE AUTOMATIC RECEPTION AND FORWARDING OF DOCUMENT PROCESSING ORDERS
PROCEDE POUR LA RECEPTION AUTOMATIQUE ET L'ACHEMINEMENT D'INSTRUCTIONS DE TRAITEMENT DES DOCUMENTS

(30) Priorität: 31.01.2002 DE 10203868
(43) Veröffentlichungstag der Anmeldung: 27.10.2004
(73) Patentinhaber: Océ Printing Systems GmbH, 85586 Poing (DE)
(72) Erfinder: ULLRICH, Peter, 85622 Feldkirchen (DE)
(74) Vertreter: Schaumburg, Thoenes, Thurn, Landskron
(86) Internationale Anmeldenummer: PCT/EP2003/000243
(87) Internationale Veröffentlichungsnummer: WO 2003/065197

(56) Entgegenhaltungen:
- EP-A- 0 782 068
- US-A- 5 469 532

## Beschreibung

Die Erfindung betrifft ein Verfahren, einen Empfangsserver und ein Computerprogramm-Modul zur automatisierten Annahme und Weiterleitung von Dokumentenbearbeitungsaufträgen. Sie betrifft insbesondere die Behandlung von Druckaufträgen, die an Hochleistungsdrucksysteme gesandt werden, deren Druckgeschwindigkeit etwa 40 Seiten bis zu über 1.000 DIN A4 Seiten pro Minute beträgt. Die Druckdaten sind dabei häufig seitenweise individuell gestaltet und die Druckdaten werden dabei insbesondere seitenweise aus statischen Daten und variablen Daten zusammengesetzt.

Zur Bearbeitung derartiger Druckaufträge werden häufig Druckserver verwendet, die Druckdaten von einer Datenquelle erhalten, diese für den Druck aufbereiten, wobei sie unter Umständen von einem ersten Datenformat in ein zweites Datenformat konvertiert werden, und den derart konvertierten Datenstrom schließlich direkt an einen angeschlossenen Drucker übertragen.

In der Veröffentlichung "Das Druckerbuch, Dr. Gerd Goldmann (HSG), 6. Ausgabe (Mai 2001), Océ Printing Systems GmbH, Poing" sind im Kapitel 14 sogenannte Océ PrismaPro Serversysteme beschrieben, die in der Lage sind, oben genannte Druckaufträge zu bearbeiten. Dazu sind verschiedene Systemkomponenten vorgesehen, die für eine weitgehende Automatisierung bei der Erstellung eines Druckauftrages sorgen. Mittels eines Print Job Managers können Druckaufträge auf einer beliebigen Kundenkonsole in einem Kundennetz erzeugt werden und diese an ein Order Distribution System übertragen werden. Dabei kann der Print Job Manager nicht nur Druckaufträge verschicken, es ist auch möglich, mittels des Print Job Managers verschiedene Ressourcen-Daten, d. h. vorgegebene, für mehrere Druckaufträge verwendbare Daten, im System zu erzeugen bzw. zu laden und auf dem Druckserver zur mehrfachen Verwendung zu hinterlegen. Dabei werden auch sogenannte Job Tickets verwendet, in denen Begleitinformationen zu den Druckaufträgen, z. B. zur Verwendung von bereits existierenden Ressourcen-Daten, Anzahl der Kopien, Ein/Ausgabefläche, Warteschlange hinterlegt sind.

Bei der Verarbeitung von Druckaufträgen in einem Druckproduktionsumfeld kommt es maßgeblich darauf an, eine möglichst performante, flexible Verarbeitung der Druckaufträge zu ermöglichen, um eine hohe Auslastung der angeschlossene Produktionsdrucker und damit eine hohe Produktivität zu erreichen.

Ein typisches Druckdatenformat in elektronischen Produktions-Druck-Umgebungen ist das Format AFP (Advanced Function Presentation), welches beispielsweise in der Publikation Nr. F-544-3884-01 der Firma International Business Machines Corp. (IBM) mit dem Titel "AFP Programming Guide and Line Data Reference" beschrieben ist.

In der EP-A-0 782 068 ist ein Desktop Drucksystem beschrieben, mit dem ein Dokument erstellt und auf einem entfernt gelegenen Drucker gedruckt werden kann. Das Drucksystem stellt vom Benutzer auswählbare Informationen über Druckoptionen zur Weitergabe an den Drucker in Form einer Bildinformationsdatei und einer Auftragsinformationsdatei bereit.

Aus der US-A-5, 469, 532 sind ein Drucksystem und ein Druckverfahren bekannt, bei denen aus einer Dokumentdatei ein Datenrahmen erzeugt wird, der zum Drucker weitergeleitet wird. Der Datenrahmen beinhaltet einen Datenstrom, der in einen sogenannten "create font command wrapper" integriert wird, der den Drucker befähigt, den Datenrahmen zu bearbeiten. In einem ersten Modus kann der Drucker den Datenstrom nicht bearbeiten und bearbeitet den wrapper. In einem zweiten Modus kann der Drucker den Datenstrom bearbeiten und ignoriert in diesem Fall den wrapper.

Aufgabe der Erfindung ist es, das Erstellen von Dokumentenbearbeitungsaufträgen aus einer oder mehreren Dateien möglichst flexibel und mit hoher Produktivität zu ermöglichen.

Diese Aufgabe wird durch die in den unabhängigen Ansprüchen angegebene Erfindung gelöst. Vorteilhafte Ausführungsformen der Erfindung ergeben sich aus den Unteransprüchen.

Erfindungsgemäß wird zum Erstellen eines Dokumentenbearbeitungauftrages, insbesondere eines Druckauftrages, aus mindestens einer Datei die Datei in ein bestimmtes Verzeichnis eines Empfangsservers übertragen, das Verzeichnis in regelmäßigen, insbesondere konfigurierbaren Zeitabständen automatisch hinsichtlich neu hinzugekommener Dateien überprüft und aus jeder neu hinzugekommenen Datei ein neuer Druckauftrag erzeugt oder die Datei einem bestehenden Druckauftrag zur Weiterverarbeitung hinzugefügt. Die Überprüfung wird mittels eines Computerprogramms gesteuert. Dabei ist ein Steuerungsmodus aus wenigstens zwei verzeichnisbezogenen Einstellungen auswählbar und dem Verzeichnis zuordenbar. In einer ersten verzeichnisbezogenen Einstellung enthalten die zwischengespeicherten Dateien nur Verarbeitungsdaten, insbesondere Druckdaten und in einer zweiten Einstellung enthalten die Dateien Verarbeitungs-bzw. Druckdaten sowie eine auftragsindividuelle Steuerdatei. In einer dritten Einstellung enthalten die Dateien Druckdaten und weisen zur Weiterverarbeitung jeweils parametrisierte Dateinamen auf.

Zur Übertragung können verschiedenste Dateibefehle, wie copy, move, ftp etc. verwendet werden. Das Verzeichnis kann auch auf ein anderes gemounted werden, wobei das Verzeichnis in einem anderen Rechner als lokal gespeichert erscheint (logisch auf anderen Rechnern liegt), aber physikalisch auf einem anderen System abgelegt ist. Die Daten können in diesem auch zwischengespeichert werden, bevor sie weitergeleitet werden.

Die Erfindung beruht auf der Erkenntnis, daß beim Erstellen derartiger Druckaufträge Steuerungsdateien, wie z. B. ein oben genanntes Jobticket häufig zumindest nahezu identische Informationen für mehrere Druckaufträge enthalten. Die Erfindung ermöglicht nunmehr, derartige universelle Steuerungsinformationen mehrfach, das heißt für mehrere Druckaufträge zu verwenden und auswählbar die vollständige oder teilweise Übernahme derartiger Steuerungsdateien in einem zweiten Dokumentenbearbeitungs- bzw. Druckauftrag bzw. in ein damit gekoppeltes Zwischenspeicherungs-Verzeichnis des Empfangs- bzw. Druckservers zu übernehmen. Die teilweise Übernahme wird dabei insbesondere durch den parametrisierten Dateinamen oder durch die mitübertragene Steuerdatei gesteuert, wobei zur Parametrisierung innerhalb des Dateinamens der zu einem Druckauftrag gehörenden Dateien abschnittsweise Code-Bezeichnungen für verschiedene vordefinierte Steuerungsinformationen angegeben sind. Dabei können vorgegebene Steuerungsinformationen übernommen bzw. Steuerungsinformationen abweichend von einer Standard-Steuerungsdatei angegeben werden. Die vor Erstellung des Druckauftrages ausgewählten und festgelegten Einstellungen werden dann konsequent bei der Erstellung des Druckauftrages von den in einer Datenquelle erzeugten Dateien über die im Druckserver bzw. dem Zwischenspeicherungs-Verzeichnis abgelegten Dateien eingehalten. Dadurch ist eine sehr zügige Erstellung des Druckauftrages möglich, weil ggf. nur geringfügig abgewandelte Parameter neu festgelegt werden müssen. Weiterhin ermöglicht die Erfindung, Druckaufträge aus verschiedensten Anwender-Systemen sehr einfach zu erzeugen. Druckparameter können bei der Erfindung sehr einfach und flexibel angegeben werden, beispielsweise vordefiniert im Dateidamen oder ein einer separat übermittelten Steuerdatei.

Die Parametrisierungen der Dateinamen kennzeichnen insbesondere unterschiedliche Optionen und/oder Arbeitsschritte zu vorgegebenen Optionen und/oder Arbeitsschritten von vorgegebenen Parametern einer dem Druckauftrag standardmäßig zugeordneten Job Ticket Steuerungsdatei.

Zusätzlich oder statt der verfügbaren Bearbeitungsschritte kann der Verarbeitung der Druckdatei ein individuelles Prozeß-Programm zugeordnet werden, das die eingehenden Dateien einem Sonder-Verarbeitungsprozeß unterzieht, und kann danach einen oder mehrere Druckaufträge erzeugen oder die Daten erneut in ein dafür vorgesehenes Verzeichnis zur Weiterbearbeitung ablegen.

Das erfindungsgemäße Verfahren zum Erstellen des Druckauftrages ist für Druckdaten aller Art geeignet, z. B. für PostScript-Daten, für Page Command Language (PCL) Daten und insbesondere vorteilhaft anwendbar bei der Verarbeitung von Druckaufträgen in dem von der Firma International Business Machines Corporation (IBM) entwickelten Datenformat "Advanced Function Presentation" (AFP) bzw. in dem entsprechenden, druckerseitigen Datenformat "Intelligent Printer Data Stream" (IPDS) mit ihren bekannten Parametern wie zum Beispiel "formdef", "pagedef" oder "class".

Zur Erstellung eines Druckauftrags aus mehreren Dateien kann insbesondere vorgesehen sein, eine Job-Steuerungsdatei zusammen mit den Druckdateien zu übertragen, aus der hervorgeht, welche Dateien in welcher Reihenfolge zu einem Druckauftrag zusammengefaßt werden. Zusammengehörende Dateien eines Druckauftrages können weiterhin insbesondere in ein- und dasselbe Verzeichnis mit zugehörigen Unterverzeichnissen übertragen werden. Die Verzeichnisse des Druckservers sind insbesondere mittels einer grafischen Benutzerstelle erstellbar und hinsichtlich ihrer standardmäßigen Verarbeitungsparameter konfigurierbar. Dabei kann dem Verzeichnis eine standardmäßige Steuerdatei zugeordnet werden.

Weitere Vorteile und Ausführungsbeispiele der Erfindung werden nachfolgend anhand einiger Figuren näher erläutert. Es zeigen:
- Fig. 1:: Ein Hochleistungs-Drucksystem und
- Fig. 2:: eine grafische Benutzerschnittstelle zur Festlegung von Parametern zur Erstellung eines Druckauftrages

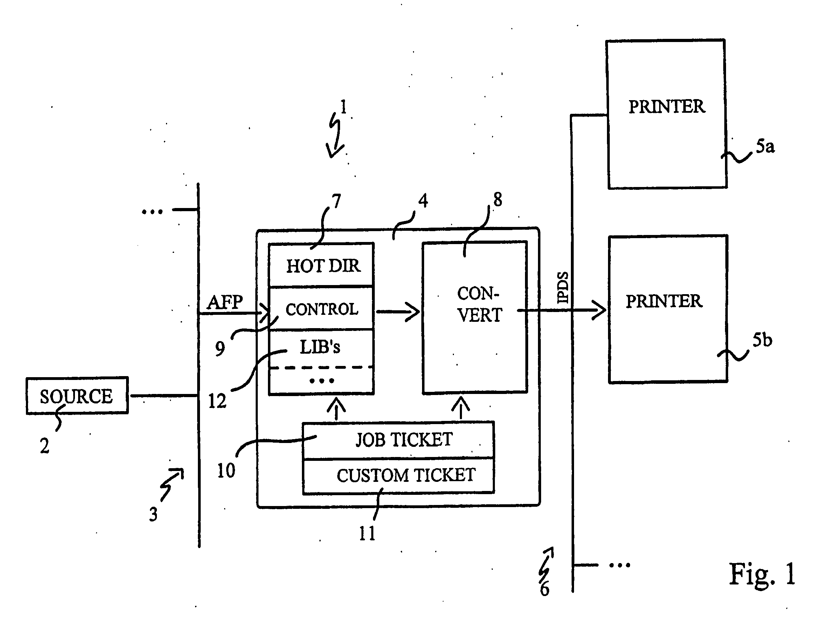

In Figur 1 ist ein Drucksystem 1 gezeigt, bei dem Druckdaten von einer Datenquelle 2, wie einem Host-Computer, einem Bandlaufwerk, einem Anwendungscomputer oder dergleichen, über ein erstes Netzwerk 3 an einen Druckserver 4 übermittelt werden. Die Datenübertragung erfolgt dabei dateiweise, wobei mehrere Dateien zu einem bestimmten Druckauftrag gehören können. Für jeden Druckauftrag ist im Druckserver 4 jeweils ein bestimmter Speicherbereich, das heißt ein Verzeichnis vorgesehen, in dem alle zu dem Druckauftrag gehörenden Dateien abgespeichert werden, sobald sie im Druckserver eingetroffen sind. Beispielsweise werden die Dateien eines aktuellen Druckauftrages im Verzeichnis "Hot dir" 7 des Druckservers 4 zwischengespeichert. Innerhalb des Druckservers 4 werden die Daten eines Druckauftrages anschließend bei Bedarf in einem Konvertierungsmodul in einen druckerangepaßten Datenstrom umgewandelt. Im vorliegenden Beispiel sind am Druckserver 4 über das zweite Netzwerk 6 mehrere Druckgeräte 5a, 5b angeschlossen, wobei die Druckdaten zwischen Druckserver 4 und den Druckgeräten 5a, 5b in der druckerangepaßten Sprache "TPDS" (Intelligent Printer Data Stream) übertragen werden.

Zum Verarbeiten eines Druckauftrages wird die zum Auftrag gehörende Druckdatei oder die entsprechenden mehreren Dateien von der Datenquelle 2 in den Zwischenspeicher 7 des Druckservers 4 übertragen. Der Zwischenspeicher bzw. das Verzeichnis 7 wird in einstellbar vorgegebenen Zeitabständen von beispielsweise 2 Sekunden hinsichtlich neu eingegangener Dateien geprüft um die Dateien einen bereits bestehenden Druckauftrag zuzufügen oder aus den eingegangenen Dateien automatisch einen neuen Druckauftrag zu erzeugen. Im Steuerungsprogramm 9 sind dazu verschiedene Parameter einstellbar, die Steuerungsinformationen zum Abarbeiten des Druckauftrages beinhalten, nämlich die Job Ticket Informationen, die in einer Job Ticket Datei 10 abgelegt sind.

Weiterhin ist im Steuerungsprogramm 9 auswählbar und zuordenbar, welche Daten und/oder Begleitdaten in den Druckdateien enthalten sind, die von der Datenquelle 2 an den Druckserver 4 übermittelt werden:

In einer ersten Einstellung wird festgelegt, daß ein weiterer Parameter Custom Ticket Informationen betrifft, die in der Custom Ticket Datei 11 abgespeichert sind und durch die diejenigen Parameter des Job Ticket 10 mit auftragsspezifischen Werten ersetzt werden, die in der Custom Ticket Datei 11 angegeben sind.

In einer zweiten Einstellung wird festgelegt, daß nur Daten übermittelt werden, die alle den gleichen vordefinierten Optionen und/oder Arbeitsschritten, welche in der Job Ticket Datei 10 angegeben sind, zugeordnet werden.

In einer dritten Einstellung kann festgelegt werden, daß die jeweils übermittelten Druckdatein in ihrem Dateinamen Informationen hinterlegt haben, die die vordefinierten Werte der Job Ticket Datei 11 für die in der übertragenen Datei enthaltenen Druckdaten überschreiben.

Das Zwischenspeicher-Verzeichnis 7 wird in vorgegebenen Zeitabständen untersucht und die eingegangenen Dateien dann anhand der jeweils geltenden Parameter des Job Tickets, des Custom Tickets bzw. der parametrisierten Dateinamen weiterverarbeitet. Für nachfolgende Konvertierungs- oder Druckprozesse können z. B. Bibliotheksdaten aus einem Bibliothekenspeicher 12 zur Verfügung gestellt werden. Aus den einzelnen im Druckserver 4 eingegangenen Dateien wird dann über das Konvertierungsmodul 8 ein ausgangsseitiger, an die angeschlossenen Druckgeräte 5a, 5b angepaßter Druckdatenstrom, z. B. im Format IPDS, erzeugt.

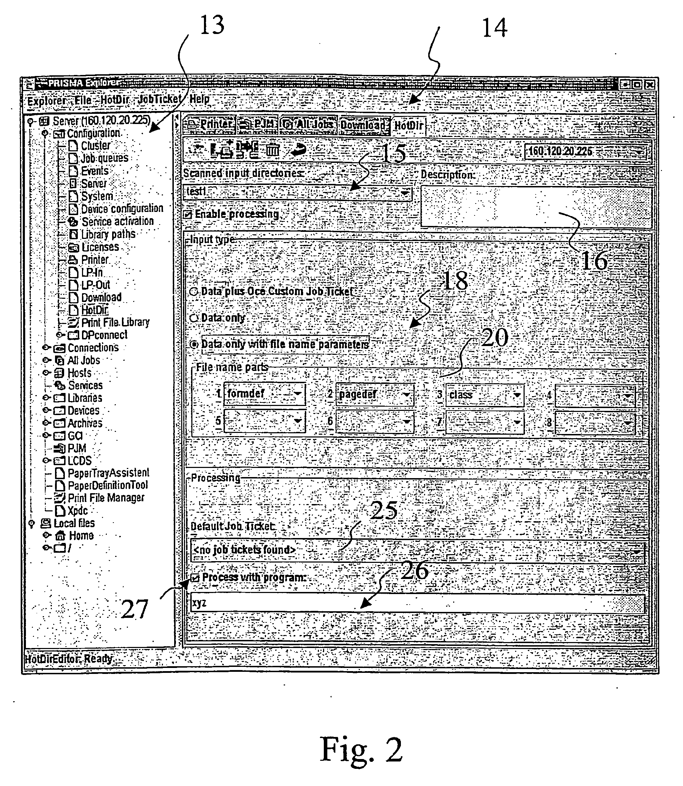

Figur 2 zeigt ein Einstellmenü, über das der Verarbeitungsmodus sowie dazugehörige Parameter festgelegt werden können. Am linken Fensterrand sind verschiedene Menüpunkte in einer Baumstruktur 13 eines Druckservers dargestellt, im mittleren und rechten Bildschirmbereich- ein Auswahlmenü 14. Ober das Einstellfeld 15 ist ein beliebiges Verzeichnis abrufbar oder einrichtbar, in dem eingehende Dateien zwischengespeichert werden. Im Feld 16 kann zum jeweiligen Verzeichnis eine genauere Erläuterung eingegeben werden. Mit dem Aktivierungsfeld 17 wird festgelegt, ob die im ausgewählten Verzeichnis eingehenden bzw. zwischengespeicherten Dateien gemäß den eingestellten Vorgaben zu einem Druckauftrag zusammengestellt werden sollen. Im Einstellbereich 18 wird festgelegt, welcher Modus dabei eingestellt werden soll. Im ersten Modus "Data Plus Océ Custom Job Ticket" ist festgelegt, daß zusätzlich zu den Druckdateien eine kundenspezifische Steuerungsdatei, das Custom Job Ticket, im Verzeichnis abgelegt wird, in dem bestimmte Verarbeitungsparameter eingestellt sind, die von dem im Feld 25 ausgewählten Standard-Steuerungsdateien (default job ticket) abweichen. Im zweiten Einstellfeld des Auswahlmenüs 18, Data only, wird festgelegt, daß im ausgewählten Zwischenspeicher-Verzeichnis "Test 1" nur Druckdaten abgespeichert sind, so daß diese vollständig mit den Steuerungsinformationen im Feld 25 eingestellten Standart Job Tickets verarbeitet werden. Im dritten Auswahlfeld des Einstellbereichs 18, "Data only with file name parametres" wird festgelegt, daß die im ausgewählten Verzeichnis "Test 1" abgelegten Dateien jeweils in ihrem Dateinamen Steuerungsparameter enthalten. Die Einzelheiten dieser Dateinamen-Parameter sind im Parameterfeld 20 angegeben, wobei im hier gezeigten Beispiel das erste Feld, welches durch einen Punkt vom nachfolgenden Feld getrennt wird, eine Angabe zu den in der Bibliothek 12 enthaltenen Formatdefinitionen "formdef" enthält, das zweite Feld die in den Bibliotheken 12 enthaltenen Seitendefinitionen "pagedef" usw. Z. B. würde die Angabe "f1xy.p1xy.4.Hallo" im Dateinamen angeben, daß die Formdef-Datei "f1xy" zu verwenden ist, die Pagedef-Datei "p1xy" und die Klasse "4".

Wie bereits oben angegeben, wird im Einstellungsfeld 25 festgelegt, welche Standard-Steuerungsdatei dem ausgewählten Zwischenspeicher-Verzeichnis "Test 1" zugeordnet ist, das heißt mit welchen Steuerungsparametern die darin gespeicherten Dateien standardmäßig verarbeitet werden, sofern durch Paratmeter einer Custom Job Ticket-Steuerungsdateie oder durch Dateinamen-Parameter nicht etwas anderes vorrangig geschrieben wird. Im Einstellfenster 26 und des zugehörigen Aktivierungsfeld 27 kann zudem angegeben werden, mit welchem anderen Verarbeitungsprogramm die Dateien beim Erstellen des Druckauftrages bearbeitet werden sollen. Beispielsweise kann dabei vorgesehen sein, Dateien eines bestimmten Formats (z. B. GIF) in ein anderes Format umzuwandeln, z. B. in einen Container der AFP-Druckersprache, bevor es der Weiterverarbeitung als Druckauftrag zugeführt wird.

Es wurden Ausführungsbeispiele der Erfindung beschrieben. Dabei ist klar, daß der Fachmann ohne weitere Weiterentwicklungen bzw. Abwandlungen angeben kann. Beispielsweise können statt der angeführten Druckersprachen AFP und IPDS auch andere Druckersprachen, wie z. B. Post Scipt, Page Command Language (PCL) oder dergleichen verwendet werden, die dem Fachmann ohne weiteres geläufig sind.

Obwohl die Erfindung vorwiegend mit Programm-Modulen des Druckservers beschrieben worden, ist klar, daß dazu korrespondierende Programm-Module auch im Bereich der Datenquelle (Ressource, Magnetband, Hostcomputer, Client-Computer...) angewandt werden, die mit den Programm-Modulen des Druckserves zusammenarbeiten. Die Programm-Module sind dabei derart steuerungstechnisch verbunden, daß im Bereich der Datenquelle die Dateien, Zusatzdateien und/oder Dateibezeichnungen so bereitgestellt werden, daß sie im Druckserver 4 von dem Steuerungsprogramm 9 entsprechend gelesen und interpretiert werden können um die Weiterverarbeitung von Daten zur Erstellung des Druckauftrages, schnell und flexibel durchführen zu können.

Obwohl die Ausführungsbeispiele anhand von Druckaufträgen beschreiben wurden, kann die Erfindung noch dazu verwendet werden, um Dokumenten-Bearbeitungsaufträge allgemeiner Natur abzuwickeln. Beispielsweise können Resourcen-Dateien oder elektronische Dokumente (wozu z. B. auch Software-Programme und deren Updates gehören können), die für Druckaufträge oder Dokumentenbearbeitungsaufträge von einem ersten System in ein zweites System übertragen werden sollen, flexibel und schnell in das zweite System übertragen werden. Dabei können die Dateien konfigurierbar nahezu beliebig konvertiert, weiterverarbeitet und/oder einem zusätzlichen Verarbeitungsprozeß unterzogen werden und im zweiten System in einem beliebigen Verzeichnis abgelegt werden. Die Verarbeitungsdaten können dabei insbesondere auch als Dokumentendaten bezeichnet werden.

Die Erfindung ist insbesondere dazu geeignet, als Computerprogramm (Software) realisiert zu werden. Sie kann damit als Computerprogramm-Modul, als Datei auf einem Datenträger wie einer Diskette oder CD-Rom oder als Datei über ein Daten- bzw. Kommunikationsnetz verbreitet werden. Derartige und vergleichbare Computerprogramm-Produkte oder Computerprogramm-Elemente sind Ausgestaltungen der Erfindung. Der erfindungsgemäße Ablauf kann in einem Computer, in einem Druckgerät oder in einem Drucksystem mit vorgeschalteten oder nachgeschalteten Datenverarbeitungsgeräten Anwendung finden. Dabei ist klar, daß entsprechende Computer, auf denen die Erfindung angewandt wird, weitere, an sich bekannte technische Einrichtungen wie Eingabemittel (Tastatur, Mouse, Touchscreen), einen Mikroprozessor, einen Daten- bzw. Steuerungsbus, eine Anzeigeeinrichtung (Monitor, Display) sowie einen Arbeitsspeicher, einen Festplattenspeicher und eine Netzwerkkarte enthalten können.

### Bezugszeichenliste

- 1: Drucksystem
- 2: Datenquelle
- 3.: erstes Netzwerk
- 4: Druckserver
- 5a, 5b: Druckgerät
- 6: zweites Netzwerk
- 7: Zwischenspeicherungs-Verzeichnis
- 8: Konvertierungsmodul
- 9: Steuerungsprogramm
- 10: Job Ticket Datei
- 11: Custom Ticket Datei
- 12: Bibliotheks-Datei
- 13: Verzeichnisbaum
- 14: Auswahlmenü
- 15: Verzeichnis-Einstellfeld
- 16: Beschreibungsfeld
- 17: Aktivierungsfeld
- 18: Modus-Einstellbereich
- 20: Parameterfeld
- 25: Standard-Steuerungsdatei
- 26: Prozeß-Einstellmenü
- 27: Aktivierungsfeld

## Patentansprüche

1. Verfahren zur automatisierten Annahme und Weiterleitung eines Dokumentenbearbeitungsauftrages zum Bearbeiten mindestens einer Datei, wobei die Datei in ein Verzeichnis (7) eines Empfangsservers (4) übertragen wird, das Verzeichnis (7) in regelmäßigen Zeitabständen automatisch hinsichtlich neu hinzugekommener Dateien überprüft wird und jede neu hinzugekommene Datei der Weiterbearbeitung zugeführt wird, wobei die Überprüfung mittels eines Computerprogramms gesteuert wird, bei dem aus wenigstens zwei der folgenden Einstellungen ein Steuerungsmodus auswählbar und dem Verzeichnis zuordenbar ist:
- die Dateien enthalten nur Verarbeitungsdaten,
- die Dateien enthalten Verarbeitungsdaten und eine auftragsindividuelle Steuerdatei
oder
- die Dateien enthalten Verarbeitungsdaten und weisen zur Weiterverarbeitung jeweils einen parametrisierten Dateinamen auf, wobei zur Parametrisierung innerhalb des Dateinamens der zu dem Dokumentenbearbeitungsauftrag gehörenden Datei abschnittsweise eine Code-Bezeichnung für eine vordefinierte Steuerungsinformation angegeben ist.

2. Verfahren nach Anspruch 1, wobei die Parametrisierungen der Dateinamen unterschiedliche Optionen und/oder Arbeitsschritte zu vorgegebenen Optionen und/oder Arbeitsschritten von vorgegebenen Parametern einer dem Druckauftrag standardmäßig zugeordneten job-ticket-Steuerungsdatei (10) kennzeichnen.

3. Verfahren nach Anspruch 1 oder 2, wobei der Dokumentenbearbeitungsauftrag ein Druckauftrag ist und der Empfangsserver (4) ein Druckserver.

4. Verfahren nach einem der vorhergehenden Ansprüche, wobei die Dateien in einem dem ausgewählten Überprüfungsmodus entsprechenden Format von einer Datenquelle (2) an den Empfangsserver (4) übertragen werden.

5. Verfahren nach einem der vorhergehenden Ansprüche, wobei zusätzlich zum Überprüfungsmodus ein Prozess-Programm auswählbar ist, das die eingehenden Dateien einem Zusatz-Verarbeitungsprozess unterzieht, bevor die Daten der Weiterbearbeitung zugefügt werden.

6. Verfahren nach einem der vorhergehenden Ansprüche, wobei die Parametrisierungen der Dateinamen AFP- oder IPDS-Parameter wie "formdef", "pagedef" oder "class" beinhalten.

7. Verfahren nach einem der vorhergehenden Ansprüche, wobei mittels einer job-Steuerungsdatei (11) mehrere Dateien zu einem Druckauftrag zusammengefasst werden.

8. Verfahren nach Anspruch 6, wobei die zusammengehörenden Dateien eines Dokumentenbearbeitungsaufrages in ein- und demselben Verzeichnis mit zugehörigen Unterverzeichnissen abgespeichert werden.

9. Verfahren nach einem der vorhergehenden Ansprüche, wobei mittels einer grafischen Benutzerschnittstelle Verzeichnisse des Druckservers erstellbar und hinsichtlich ihrer standardmäßigen Verarbeitungsparameter konfigurierbar sind.

10. Empfangsserver zum Durchführen eines Verfahrens nach einem der Ansprüche 1 bis 8.

11. Computerprogramm-Modul zum Durchführen eines Verfahrens nach einem der Ansprüche 1 bis 8.

## Claims

1. A method for the automatic receiving and forwarding of a document processing order for processing at least one data file, wherein the data file is sent to a directory (7) of a receiving server (4), the directory (7) is automatically checked at regular time intervals for newly added data files, and each newly added data file is supplied for further processing, wherein the checking is controlled by a computer program, in which a control mode can be selected from at least two of the following settings and can be allocated to the directory:
- the data files contain only processing data,
- the data files contain processing data and an order-individual control data file, or
- the data files contain processing data and for further processing each data file has a parametrized data filename, wherein for parametrization within the data filename of the data file associated to the document processing order a code name for a predefined control information is given section-wise.

2. The method according to claim 1, wherein the parametrizations of the data filenames mark various options and/or operational steps for predetermined options and/or operational steps of predetermined parameters of a job ticket control data file (10) that is standardly allocated to the print order.

3. The method according to claim 1 or 2, wherein the document processing order is a print order and the receiving server (4) is a print server.

4. The method according to one of the preceding claims, wherein the data files are sent to the receiving server (4) from a data source (2) in a format that corresponds to the selected check mode.

5. The method according to one of the preceding claims, wherein in addition to the check mode a process program can be selected that subjects the incoming data files to an additional processing before the data are added to the further processing.

6. The method according to one of the preceding claims, wherein the parametrizations of the data filenames contain AFP or IPDS parameters, such as "formdef', "pagedef" or "class".

7. The method according to one of the preceding claims, wherein a plurality of data files are combined to form a print order by means of a job control data file (11).

8. The method according to claim 6, wherein the associated data files of a document processing order are stored in one and the same directory with associated subdirectories.

9. The method according to one of the preceding claims, wherein, using a graphic user interface, directories of the print server can be created and can be configured with respect to their standard processing parameters.

10. A receiving server for executing a method according to one of the claims 1 to 8.

11. A computer program module for executing a method according to one of claims 1 to 8.

## Revendications

1. Procédé de réception et de transmission automatisées d'une tâche de traitement de documents permettant de traiter au moins un fichier, procédé dans lequel le fichier est transmis dans un répertoire (7) d'un serveur de réception (4), le fichier (7) est vérifié automatiquement à intervalles réguliers pour connaître les nouveaux fichiers ajoutés et chaque nouveau fichier ajouté est transmis en vue d'un traitement ultérieur, la vérification étant commandée au moyen d'un programme informatique dans lequel un mode de commande peut être choisi à partir d'au moins deux des réglages suivants, et être associé au répertoire :
- les fichiers ne contiennent que des données de traitement,
- les fichiers contiennent des données de traitement et un fichier de commande propre à la tâche,
ou
- les fichiers contiennent des données de traitement et possèdent chacun un nom de fichier paramétré en vue d'un traitement ultérieur, un identificateur d'une information de commande prédéfinie étant transmis par portions pour le paramétrage à l'intérieur du nom du fichier appartenant à la tâche de traitement de documents.

2. Procédé selon la revendication 1, dans lequel le paramétrage des noms de fichiers caractérise différentes options et/ou des étapes opératoires liées à des options prescrites et/ou des étapes opératoires liées à des paramètres prescrits d'un fichier de commande job-ticket (10) associé de façon normalisée à la tâche d'impression.

3. Procédé selon la revendication 1 ou 2, dans lequel la tâche de traitement de documents est une tâche d'impression, et le serveur de réception (4) est un serveur d'impression.

4. Procédé selon l'une des revendications précédentes, dans lequel les fichiers sont transmis d'une source de données (2) au serveur de réception (4) dans un format correspondant au mode de vérification choisi.

5. Procédé selon l'une des revendications précédentes, dans lequel on peut choisir, en plus du mode de vérification, un programme de traitement qui soumet les fichiers entrant à un traitement supplémentaire, avant de transmettre les fichiers pour traitement ultérieur.

6. Procédé selon l'une des revendications précédentes, dans lequel le paramétrage des noms de fichiers contient des paramètres AFP ou IDPS, tels que "formdef", "pagedef" ou "class".

7. Procédé selon l'une des revendications précédentes, dans lequel plusieurs fichiers sont regroupés en une tâche d'impression au moyen d'un fichier de commande de tâche (11).

8. Procédé selon la revendication 6, dans lequel les fichiers apparentés d'une tâche de traitement de documents sont mémorisés dans un unique et même répertoire auquel sont associés des sous-répertoires.

9. Procédé selon l'une des revendications précédentes, dans lequel des répertoires du serveur d'impression peuvent être créés au moyen d'une interface utilisateur graphique et configurés relativement à leurs paramètres de traitement normalisés.

10. Serveur de réception, destiné à mettre en oeuvre un procédé selon l'une des revendications 1 à 8.

11. Module de programme informatique, destiné à mettre en oeuvre un procédé selon l'une des revendications 1 à 8.
